# EUROPEAN PATENT SPECIFICATION

(11) **EP 1 494 327 B1**
(45) Date of publication and mention of the grant of the patent: **29.08.2007**
(21) Application number: 04380113.3
(22) Date of filing: 25.05.2004
(51) Int. Cl.: H02G 3/04, H02G 3/06

(54) **Ducting for electrical installations**
Kanal für elektrische Installationen
Goulotte pour installations électriques

(30) Priority: 04.07.2003 ES 200301605 U
(43) Date of publication of application: 05.01.2005
(73) Proprietor: Unex Aparellaje Electrico S.L., 08903 L'Hospitalet de Llobregat (Barcelona) (ES)
(72) Inventor: Benito Navazo, Juan Manuel, 08290-Sant Cugat del Valles (Barcelona) (ES)
(74) Representative: Curell Aguilà, Marcelino

(56) References cited:
- EP-A- 0 630 090
- WO-A-03/023924
- FR-A- 1 305 181
- GB-A- 2 311 419
- US-A- 3 281 005
- US-A- 4 874 322

## Description

### Field of the invention

This invention relates to ducting for electrical installations, in particular such as are constituted by a base profile associated with a cover profile and which are structured so as to be installed as a baseboard, generally in the lower part of a wall.

### State of the art

To install such ducting, the base and cover profiles are cut to the measure of the wall, should there be no need for carrying out of branching or the installation of an electrical mechanism such as a plug base, in which case the profiles are cut so as to leave a space between them for the electrical mechanism or the branching. No accessories are known which allow a correct protected connection of such profiles with the electrical mechanism or another ducting bearing the branching, means thus need to be improvised which results in a more time-consuming installation and non-secure isolating conditions as concerns the electrical conductors housed in the ducting.

With the objective of resolving said drawback branching members have been created which allow the branching of electrical conductors from a skirting board ducting to a moulding ducting, which is to say a smaller dimensioned ducting. However, since in practice branchings are carried out at the ends of the skirting board ducting, such branching members must be able to couple with said ducting either on the left end or on the right end, and thus two different types thereof are required.

Similarly, join cover-devices which are used when two skirting board ducting portions are aligned are neither usual nor really effective as concerns a tight seal and requirements as to appearance necessary in such installations.

Additionally, no closing member has been provided for the free ends of the ducting, nor means which allow guaranteed retention of the conductors within the base profile's carriers during the cable laying operation and which, subsequently, prevent such conductors from falling free when the cover profile is removed for inspection, repair or improvements. To carry out said ducting's connection at concave and convex angles, as well for the branched installation of electrical mechanisms, accessories can be used that, designed for conventional ducting, can be formally adapted to current skirting board ductings, conserving their functional principle.

It would thus be advantageous to complement the above mentioned base and cover profiles with members that allow their correct installation as concerns branchings, intermediate joins, end closing, retention of the laid conductors, etc.

US4874322, WO03023924A and FR1305181 disclose different kinds of ducting for electrical installations provided with carriers for holding electrical conductors and including some solutions for branchings, intermediate joins and end closing. In particular, FR1305181 discloses a ducting adopting an openable skirting board configuration comprising a base profile associated with a cover profile, said base profile comprising a flat base member designed to be applied by one face to a wall for mounting and a series of cantilevered partitions emerging perpendicularly from the other face of said base profile, said cantilever partitions forming at their free end a guard which is distanced from the cantilevered partition immediately above, said cantilevered partitions and said guards assemblies constituting a corresponding number of carriers for holding electrical conductors.

US3281005 and EP0630090A disclose further solutions for covers and intermediate joins.

### Summary of the invention

The objective of the invention is to resolve such drawbacks. This aim is achieved by means of ducting for electrical installations such as the one disclosed in FR1305181, further comprising the combination of features of the characterizing part of claim 1.

Preferably, said base profile has arranged along its entire length, in the lower part thereof, a strip profile for receiving the edge of a carpet or similar.

Preferably, said base profile has arranged along its entire length, in the lower part thereof, a cantilevered beading which emerges perpendicularly from said base profile and is suitable for supporting a strip profile, so that it is possible to engage, optionally, a strip profile for receiving the edge of a carpet or similar.

Advantageously, said cantilevered beading emerges from the lower edge of the base profile and constitutes a support on which said strip profile is inserted, said strip profile being a C profile which has a clipping edge and a flap for seating on the floor.

Advantageously, said base profile comprises a flat base member, designed to be placed by means of one of its faces against a wall for mounting, whilst from the other face emerge a series of cantilevered partitions which, at their free end, form a guard distanced from the cantilevered partition immediately above it, said cantilevered partition and guard assemblies constituting a respective number of carriers in which electrical conductors can be placed.

Preferably, the upper of said carriers faces a canopy which limits said flat base member at the top thereof and has an indent where the edge of said flat base member joins the canopy, the lower of said carriers facing, by means of its back face, the convex face of a dihedral wall which emerges from said flat base member, whilst, as concerns the cover profile, it consists of a flat cover member which has a flap at its upper edge that is dimensioned so as to cover the canopy of said flat base member and has an end tooth for engaging to said canopy's indent whilst, at its lower edge said flat cover member has an oblique flap that mates with part of the concave face of the dihedral wall.

Advantageously, the ducting for electrical installations according to the invention has a branching device, to be interpositioned between two base profile portions, and which is constituted by a guide member for the branched cables having apertures for securing to a wall and a covering member for said guide member, with which it is joined by means of a screw.

Preferably, said guide member is constituted by a base plate from which emerge, from only one of its faces, a plurality of segregable tiles which, arranged on edge and with no relationship to one another, form a grid which configures longitudinal and/or transverse paths when said tiles are segregated in an order which permits such, whilst from the longitudinal edges of said base plate extend flaps for insertion in the carriers of each base profile portion to be joined.

Preferably, said covering member frontally covers said guide member and, by means of two flaps, covers said guide member both above and below, said guide member having a transversal partition which lies coplanar with the lower of said carriers and is normal to the base plate of said guide member, the lower of said flaps overlapping said transversal partition, whilst the upper of said flaps covers the edges of the upper vertical segregable tiles and has weakening lines to, by segregation along certain of said lines, allow the access of moulding ducting for the conductors branched from the carriers of the ducting base profile.

Advantageously, the ducting for electrical installations according to the invention comprises a joint cover-device, to be installed between two portions of ducting, which is formed by a join member, designed to join the base profiles of said two portions of ducting, and a cover member designed to be placed so as to cover said join member.

Preferably, said join member has an elongate form and comprises a web from which pairs of join appendices emerge laterally and which fit in the respective carriers of the base profiles of said ducting portion.

Preferably, a hooked lip is provided in at least one of said pairs of join appendices, and a lower lip is provided in the respective carriers of the ducting base profiles, thus constituting engaging means by the interlocking of said hooked lip with said lower lip.

Advantageously, said join member comprises an upper flap having fingers and a lower flap, engaging means thus being constituted by means of said fingers clipping on the canopy of the ducting base profiles and by the lower flap coupling on the edge of the dihedral wall of said base profiles.

Preferably, said cover member is constituted by a rectangular plate, the upper end thereof being bent perpendicularly to form an upper flap to cover the corresponding part of the canopy of the ducting base profiles, said rectangular plate likewise being provided, at its lower end, with a lower flap which mates with the concave face of the base profiles' dihedral wall.

Advantageously, said fingers of said join member are separated by a notch and a tooth which fits in said notch projects from said upper flap of the cover member rectangular plate.

Preferably, said join member's web is provided with a longitudinal through slot, and said cover member has on its inner face a rib for fitting in said join member's longitudinal through slot.

Advantageously, the end cover device consists of an open prismatic body which has a fore wall and a rear wall that is narrower than said fore wall, said two walls being joined by respective bases and by a lateral wall, which is perpendicular to all of the former and faces an open face, said lateral wall having flaps on its inner face for positioning with respect to the base profile's carriers.

Preferably, the centre carrier of said base profile's carriers is provided with a channel, and said lateral wall of the end cover device is provided on its inner face with annular projections which coincide one-to-one with said channel, it being possible to perforate one or the other of said annular projections for the introduction of a fastening screw according to whether they are at the right or left end of the ducting.

Advantageously, said retaining tiles have, in the edge thereof which is applied to said guards, clip devices which clip the bead and configure flaps which prevent the rotation of the retaining tiles outwards with respect to the carriers.

### Brief description of the drawings

To facilitate understanding of the above ideas, the following is a description of a preferred embodiment of the invention, referring to the accompanying illustrative drawings, in which:
Figure 1, represents a straight section of a skirting board ducting which incorporates the features of the invention;
Figure 2, represents, in perspective, a portion of the base profile of the skirting board ducting of the previous figure associated with the guide member of a branching device according to the invention;
Figure 3, represents, in perspective, the guide member of a branching device represented in figure 2;
Figure 4, represents, in perspective, the covering member which closes the guide member of figures 2 and 3;
Figure 5, represents, in perspective, a retaining tile analogue to that forming part of figure 2;
Figure 6, represents a fragmentary section of the manner in which a retaining tile clips the free edge of the guards of a carrier of a ducting base profile;
Figure 7, represents, in elevation, the positioning of a join member for a joint cover-device in a base profile;
Figure 8, represents, in elevation, the cover member designed to be placed over the member of the previous figure;
Figure 9, represents, in perspective, the join member of figure 7;
Figure 10, represents, in perspective, respective portions of ducting base profiles, aligned and juxtaposed, a join member of a join cover-device being mounted between them;
Figure 11, represents, in perspective, the cover member of figure 8;
Figure 12, represents, in perspective and rear elevation, an end cover device; and
Figure 13, represents, in perspective, a portion of skirting board ducting according to the invention which has an end closed by an end cover device, whilst the other end is uncovered and positionally facing an end cover device seen in a front elevation perspective view.

### Detailed description of some embodiments of the invention

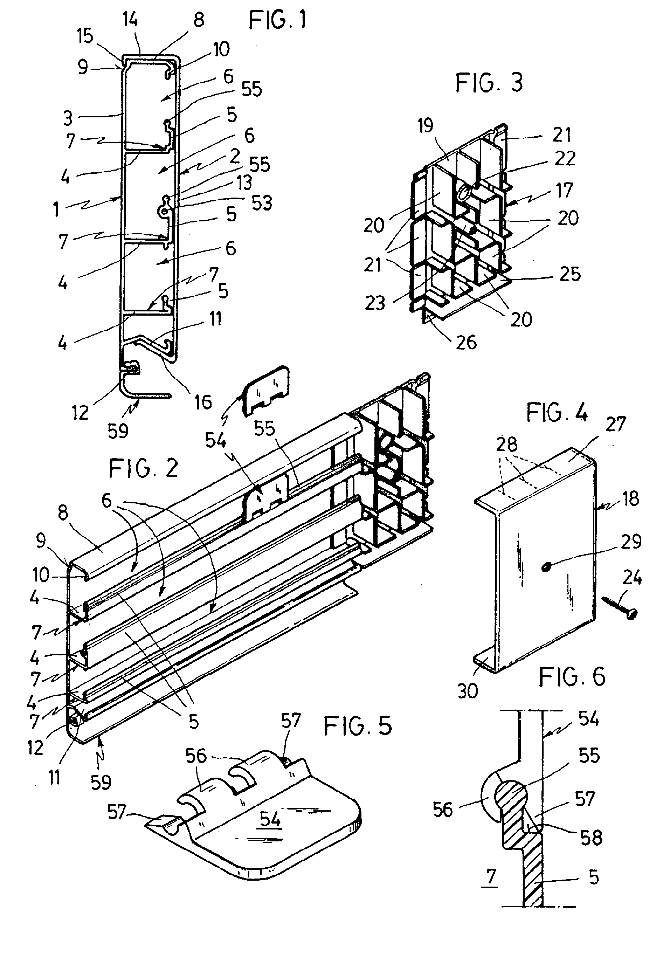

Figure 1 shows a straight section of a skirting board ducting which comprises a base profile 1 and a cover profile 2, the assembly being complemented by a C strip profile which is inserted on said base profile 1.

Still referring to figure 1, one observes that the base profile 1 comprises a flat base member 3, to be applied by one face to an installation wall, and from which, on the other face and perpendicularly, emerge a series of cantilevered partitions 4 which, at the end or free edge thereof, form a guard 5, which is distanced from the cantilevered partition 4 immediately above by a space 6, which is suitable to allow the laying of electrical conductors by means of lateral insertion, said cantilevered partition 4 and guard 5 assembly forming a carrier 7 for the housing of said electrical conductors.

The upper carrier 7, as shown in figures 1 and 2, faces a canopy 8 which limits said flat base member 3 at the top thereof and has an indent 9 where it joins with the end edge of said flat base member 3, said canopy further has a narrow skirt 10 at its free edge.

Additionally, the lower carrier 7 faces, by means of its back face, the convex face of a dihedral wall 11 which emerges, substantially perpendicular to said flat base member 3, and extends between the back face of said lower carrier 7 and a short normal beading 12 which limits said flat base member 3 at the bottom thereof.

The cover profile 2, as can be seen in said figure 1, consists of a flat cover member 13 which, at an upper edge thereof, has a flap 14 which is dimensioned so as to cover the canopy 8 of the flat base member 3, and has an end tooth 15 designed to engage in the indent 9 of the canopy 8 of the flat base member 3 whilst, at a lower edge thereof, said cover member has an oblique flap 16 which mates with part of the concave face of the dihedral wall 11.

As shown in figures 2 to 4, interpositioned between one end of a portion of base profile 1 which is illustrated and another, which is not illustrated, is installed a branching device which is constituted by the association of a guide member 17 and a covering member 18.

As can be observed in figures 2 and 3, the guide member 17 is constituted by a base plate 19 from which emerge, from one face thereof, a plurality of segregable tiles 20 which are arranged on edge, with no relationship to one another, and which form a grid which configures longitudinal and/or transverse paths when said segregable tiles 20 are segregated in an order which permits such depending on the branching to be carried out, whilst from the longitudinal edges thereof extend flaps 21 for insertion in the spaces of the carriers 7.

This base plate 19 further has an aperture 22 for securing to the wall by screw means, a bore in a pin 23 to receive a screw 24 for securing the covering member 18, and also has a transversal partition 25 and a lower beading 26.

Said guide member 17 is closed by the covering member 18, the latter having an upper flap 27, parts of which can be segregated according to weakening lines 28, an aperture 29 for the passage of said screw 24 and a lower flap 30.

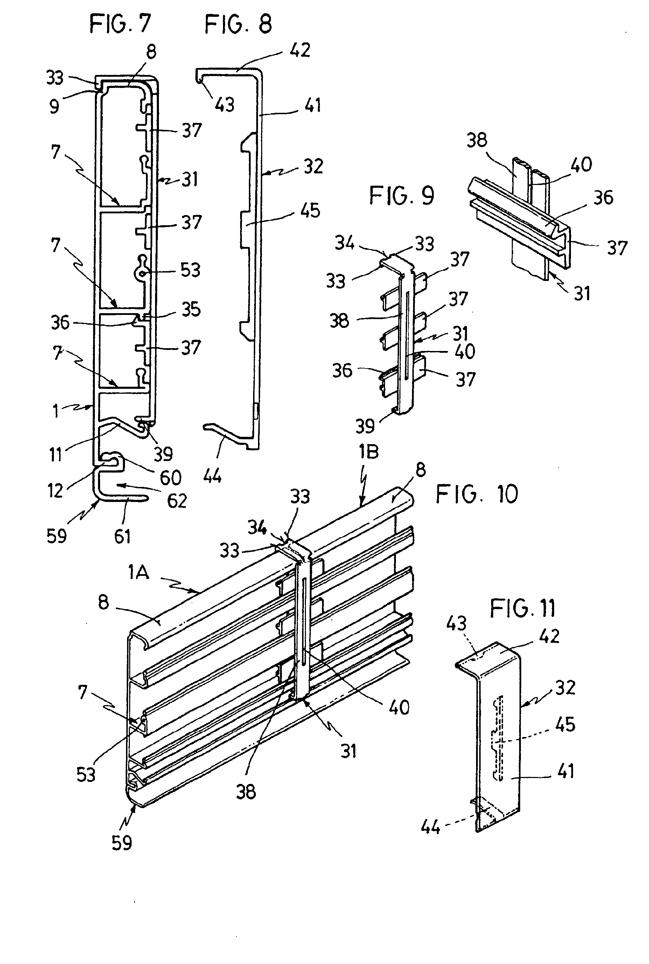

In figures 7 to 11, the installation and organisation of a join cover-device is shown, which is positioned between two portions of base profile 1A and 1B and constituted by a join member 31 and a cover member 32.

The join member 31 has means for engaging, by clipping, on the canopy 8 of the base profile 1, constituted by two fingers 33 separated by a notch 34 and further has means for engaging on a lower lip 35 of a carrier 7 by means of a hooked lip 36 which protrudes from one of pairs of join appendices 37 which emerge laterally from the web 38 of the join member 31 and fit in the respective carriers 7 of one and the other of the two portions 1A and 1B to be joined, whilst, by means of a lower flap 39, coupling is assured on the edge of the dihedral wall 11 of the base profile 1 and there is also provided a longitudinal through slot 40.

Additionally, the cover member 32 is formed by an elongate rectangular plate 41 which, in the upper part thereof, configures an upper flap 42 that projects a tooth 43 dimensioned so as to fit in said notch 34 and which, in the lower part thereof, extends in a flap 44 for fitting in the concavity of the dihedral wall 11 of the base profile 1. Longitudinally, in the inner face thereof, is furthermore arranged a rib 45 for fitting in the above mentioned longitudinal through slot 40 of the join member 31.

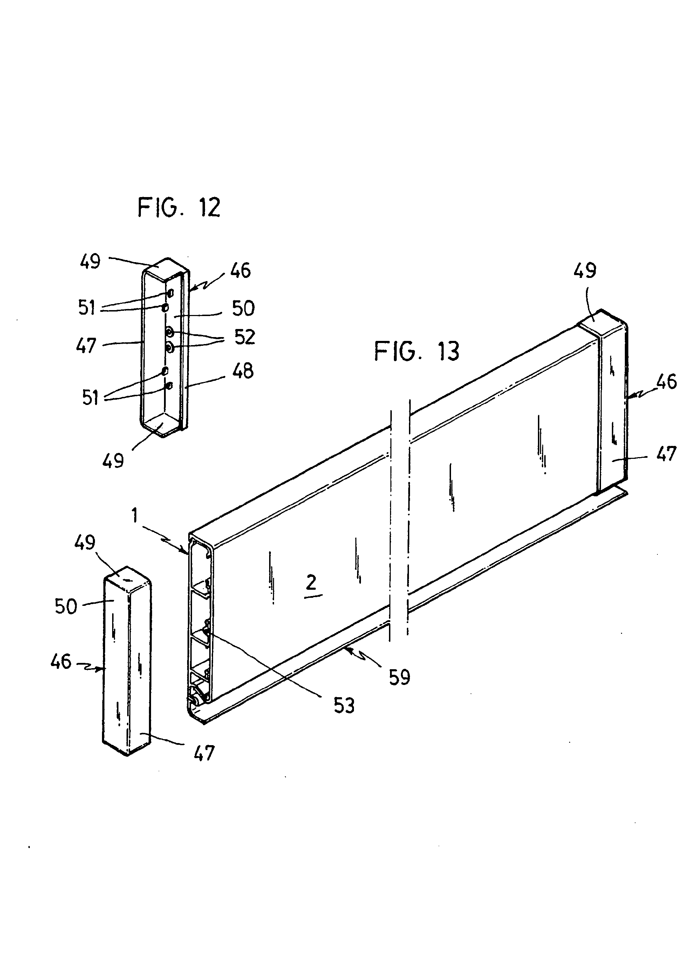

In figures 12 and 13, the end cover device 46 is shown, which consists of an open prismatic body having a wide fore wall 47 and a narrow rear wall 48, which are joined by respective bases 49 and by a lateral wall 50, which is perpendicular to all of the foregoing and faces an open face.

The inner face of said lateral wall 50 has two pairs of flaps 51 for positioning with respect to the carriers 7 of the base profile 1 and two annular projections 52, in one-to-one correspondence with a channel 53 provided in the guard 5 of the central carrier 7, one or the other of which are individually perforated for insertion of a screw, according to whether the end cover device 46 is situated at the left or right end of the ducting.

Figures 2, 5 and 6 show the configuration of retaining tiles 54 which as can be observed in figure 2 are mounted so as to straddle a bead 55 of the guards 5 of the carriers 7, as shown in detail in figure 6, by means of a clip arrangement constituted by a central nose 56 and two end flaps 57 step which clip on the bead 55 such that said end flaps 57 bear on the step 58 of the guard 5 and prevent an outwards rotation of the retaining tile 54, thus preventing the accidental freeing of the electrical conductors held in the carriers 7 but still allowing an inwards rotation so as to enable the subsequent insertion of one of such conductors.

Furthermore in figures 1, 2, 7, 10 and 13 a C strip profile 59 is shown which has a clipping edge 60 for coupling with the normal beading 12 and a seating flap 61 for application against the floor, delimiting a space 62 for receiving the edge of a carpet or similar.

## Claims

1. Ducting for electrical installations, said ducting adopting an openable skirting board configuration comprising a base profile (1) associated with a cover profile (2), said base profile (1) comprising a flat base member (3) designed to be applied by one face to a wall for mounting and a series of cantilevered partitions (4) emerging perpendicularly from the other face of said base profile (1), said cantilever partitions (4) forming at their free end a guard (5) which is distanced from the cantilevered partition immediately above, said cantilevered partitions (4) and said guards (5) assemblies constituting a corresponding number of carriers (7) for holding electrical conductors, **characterised in that** the free edge of said guard (5) is brought inwards with respect to the external plane of said guard (5) and is finished with a bead (55), said bead (55) constituting supporting means in which a cable retaining tile (54) is secured by clipping, said retaining tile (54) closing, at one interval, the front access to said carrier (7) constituted by said guard (5).

2. Ducting for electrical installations according to claim 1, **characterised in that** said retaining tile (54) has, in its edge applied to said guard (5), clip arrangements which clip on said bead (55) of said guard (5), allowing the rotation of said retaining tile (54) towards the interior of said carrier (7), said clip arrangements comprising a flap (57) which prevents the rotation of said retaining tile (54) towards the exterior of said carriers (7).

3. Ducting for electrical installations according to claim 2, **characterised in that** said retaining tile (54) extends the external face of said guard (5) and fits to a step (58) formed by the brought inwards position of said free edge of said guard (5), so that the external faces of said retaining tile (54) and said guard (5) are coplanar.

4. Ducting for electrical installations according to claim 3, **characterised in that** said clip arrangements comprise a central nose (56) disposed between and two of said flaps (57), said central nose (56) and said flaps (57) clipping said bead (55) by opposite sides.

5. Ducting for electrical installations according to any of claims 1 to 4, **characterised in that** the upper of said carriers (7) faces a canopy (8) which limits said flat base member (3) at the top thereof and has a indent (9) where it joins with the edge of said flat base member (3), the lower of said carriers (7) facing, by means of its back face, the convex face of a dihedral wall (11) which emerges from said flat base member (3), and said cover profile (2) consists of a flat cover member (13) which, at the upper edge thereof, has a flap (14) which, being dimensioned to cover said canopy (8) of the flat base member (3), has an end tooth (15) for engaging in said indent (9) of said canopy (8) and, at the lower edge thereof, said flat cover member (13) has an oblique flap (16) which mates with part of the concave face of the dihedral wall (11), so that when said cover profile (2) is joined to said base profile (1), said end tooth (15) being engaged in said indent (9) of the canoply (8) and said oblique flap (16) being applied against said concave face of the dihedral wall (11), the internal face of said flat cover member (13) is applied against the external plane of said guards (5).

6. Ducting for electrical installations according to any of claims 1 to 5, **characterised in that** said base profile (1) has arranged along its entire length, in the lower part thereof, a cantilevered beading (12) which emerges perpendicularly from said base profile (1) and is suitable for supporting a said strip profile (59).

7. Ducting for electrical installations according to claim 6. **characterised in that** said cantilevered beading (12) emerges from the lower edge of the base profile (1) and constitutes a support on which a strip profile (59) is inserted, said strip profile (59) being a C profile which has a clipping edge (60) and a flap (61) for seating on the floor.

8. Ducting for electrical installations according to any of claims 1 to 7, **characterised in that** it comprises a branching device, to be interpositioned between two portions of base profile (1) and which is constituted by a guide member (17) for branched cables which is provided with apertures (22) for securing to a wall, and a covering member (18) for said guide member (17), with which it is joined by means of a screw (24), said guide member (17) being constituted by a base plate (19) from which emerge, from one of its faces, a plurality of segregable tiles (20) which, arranged on edge and with no relationship to one another, form a grid which configures longitudinal and/or transverse paths when said tiles (20) are segregated in an order which permits such, whilst from the longitudinar edges of said base plate (19) extend flaps (21) for insertion in the carriers (7) of each portion of base profile (1) to be joined

9. Ducting for electrical installations according to claim 8, **characterised in that** said covering member (18) frontally covers said guide member (17) and, by means of two flaps (27, 30) covers said guide member (17) both in the upper part and the lower part thereof, said guide member (17) having a transversal partition (25) which lies coplanar with the lower of said carriers (7) and is normal to the base plate (19) of said guide member (17), the lower (30) of said flaps overlapping said transversal partition (25), whilst the upper (27) of said flaps covers the edges of the upper vertical segregable tiles (20) and has weakening lines (28) to, by segregation along certain of said weakening lines (28), allow the access of moulding ductings for the conductors branched from the carriers (7) of the ducting base profile (1).

10. Ducting for electrical installations according to any of claims 1 to 9, **characterised in that** it comprises a join cover-device, to be installed between two portions of ducting, which is formed by a join member (31) designed to join the base profiles (1A, 1B) of said two portions of ducting, and a cover member (32) designed to be placed over said join member (31) so as to cover such, said join member (31) being elongate and comprising a web (38) from which emerge laterally pairs of join appendices (37) which fit in the carriers (7) of one and the other of the base profiles (1A, 1 B) of said portions of ducting.

11. Ducting for electrical installations according to claim 10, **characterised in that** at least one of said pairs of join appendices (37) is provided with a hooked lip (36), and a lower lip (35) is provided in the corresponding carriers (7) of the ducting base profiles (1A, 1B), thus constituting engaging means by the fitting of said hooked lip (36) on said lower lip (35).

12. Ducting for electrical installations according to claims 5 and 10, **characterised in that** said join member (31) comprises an upper flap provided with fingers (33) and a lower flap (39), thus constituting means of engaging by clipping of the fingers (33) on the canopy (8) of the ducting base profiles (1A, 1B) and by coupling of the lower flap (39) on the edge of the dihedral wall (11) of said base profiles (1A, 1 B).

13. Ducting for electrical installations according to claims 5 and 10, **characterised in that** said cover member (32) is constituted by a rectangular plate (41) which is bent perpendicularly at the upper end thereof to form an upper flap (42) for covering the corresponding part of the canopy (8) of the ducting base profiles (1A, 1B), said rectangular plate (41) likewise being provided, at the lower end thereof, with a lower flap (44) which mates with the concave face of the dihedral wall (11) of said base profiles (1A, 1B).

14. Ducting for electrical installations according to claims 12 and 13, **characterised in that** said fingers (33) of the join member (31) are separated by a notch (34) and said upper flap (42) of the rectangular plate (41) of the cover member (32) projects a tooth (43) which fits in said notch (34).

15. Ducting for electrical installations according to any of claims 10 to 14. **characterised in that** the web (38) of said join member (31) is provided with a longitudinal through slot (40), and the inner face of said cover member (32) is provided with a rib (45) for fitting in said longitudinal through slot (40) of the join member (31).

16. Ducting for electrical installations according to any of claims 1 to 15, **characterised in that** it comprises an end cover device (46) suitable for being arranged at one end of a portion of said ducting, said cover device (46) consisting of an open prismatic body which has a fore wall (47) and a rear wall (48) which is narrower than said fore wall (47), said two walls (47, 48) being joined by respective bases (49) and by a lateral wall (50) which is perpendicular to all of the foregoing and faces an open face, the inner face of said lateral wall (50) having flaps (51) for positioning with respect to the carriers (7) of the base profile (1).

17. Ducting for electrical installations according to claim 16, **characterised in that** the central carrier (7) of the base profile (1) is provided with a channel (53), and the inner face of said lateral wall (50) of the end cover device (46) is provided with annular projections (52) which coincide one-to-one with said channel (53), it being possible to perforate one or the other of said annular projections (52) for the introduction of a fastening screw according to whether they are at the right or left end of the ducting.

## Patentansprüche

1. Kanal für elektrische Installationen, wobei der Kanal einen aufmachbaren Sockelleistenaufbau anwendet, umfassend ein Basisprofil (1), verbunden mit einem Deckprofil (2), das Basisprofil (1) umfasst ein flaches Basisbauteil (3), konstruiert, um durch eine Seite zu einer Wand zur Befestigung angewendet zu werden, und eine Serie ausladender Abschnitte (4), die rechtwinklig von der anderen Seite des Basisprofils (1) hervortreten, wobei die ausladenden Abschnitte (4) an ihrem freien Ende einen Schutz (5) bilden, welcher von dem ausladenden Abschnitt direkt darüber entfernt ist, die ausladenden Abschnitte (4) und die Schutz (5)-Anordnungen bilden eine entsprechende Anzahl von Trägern (7) zum Halten von elektrischen Leitern, **dadurch gekennzeichnet, dass** die freie Kante des Schutzes (5) einwärts gebracht ist in Bezug zu der äußeren Ebene des Schutzes (5) und abgeschlossen ist mit einem Wulst (55), wobei der Wulst (55) unterstützende Mittel bildet, in welchen eine zurückhaltende Platte (54) durch Anklipsen gesichert ist, wobei die enthaltende Platte (54) bei einem Intervall den vorderen Zugang zu dem Träger (7), gebildet aus dem Schutz (5), schließt.

2. Kanal für elektrische Installationen nach Anspruch 1, **dadurch gekennzeichnet, dass** die zurückhaltende Platte (54) in ihren an dem Schutz (5) angewandten Kanten Klippeinrichtungen hat, welche auf dem Wulst (55) des Schutzes (5) klemmen, wobei sie die Rotation der enthaltenden Platte (54) in Richtung des Inneren des Trägers (7) erlauben, die Klippeinrichtungen umfassen eine Klappe (57), welche die Rotation der zurückhaltende Platte (54) in Richtung des Äußeren der Träger (7) verhindert.

3. Kanal für elektrische Installationen nach Anspruch 2, **dadurch gekennzeichnet, dass** die zurückhaltende Platte (54) die externe Seite des Schutzes (5) erweitert und zu einer Stufe (58) passt, die durch die Einwärtsbringposition der freien Kante des Schutzes (5) gebildet ist, so dass die externen Seiten der zurückhaltende Platte (54) und des Schutzes (5) koplanar sind.

4. Kanal für elektrische Installationen nach Anspruch 3, **dadurch gekennzeichnet, dass** die Klippanordnungen umfassen eine zentrale Nase (56), angeordnet zwischen und zwei der Klappen (57), die zentrale Nase (56) und die Klappen (57) klemmen den Wulst (55) auf gegenüberliegenden Seiten.

5. Kanal für elektrische Installationen nach irgendeinem der Ansprüche 1 bis 4, **dadurch gekennzeichnet, dass** der obere der Träger (7) einer Haube (8) zugewandt ist, welche das flache Basisbauteil (3) beschränkt an der Spitze davon und eine Kerbe (9) hat, wo es die Kante des flachen Basisbauteils (3) trifft, wobei der untere der Träger (7) mittels seiner Rückseite der konvexen Seite einer dihedralen Wand (11) zugewandt ist, welche aus dem flachen Basisbauteil (3) hervortritt, und das Deckprofil (2) besteht aus einem flachen Deckbauteil (13), welches an der oberen Kante davon eine Klappe (14) hat, welche dimensioniert ist, um die Haube (8) des flachen Basisbauteils (3) zu bedecken, einen Endzahn (15) hat zum Eingreifen in die Kerbe (9) der Haube (8), und an der unteren Kante davon hat das flache Deckbauteil (13) eine schiefe Klappe (16), welche zusammenpasst mit dem Teil der konkaven Seite der dihedralen Wand (11), so dass, wenn das Deckprofil (2) das Basisprofil (1) trifft, der Endzahn (15) in die Kerbe (9) der Haube (8) eingreift und die schräge Klappe gegen die konkave Seite der dihedralen Wand eingesetzt wird, die interne Seite des flachen Deckbauteils (13) gegen die externe Ebene der Schutze (5) eingesetzt ist.

6. Kanal für elektrische Installationen nach irgendeinem der Ansprüche 1 bis 5, **dadurch gekennzeichnet, dass** das Basisprofil (1) entlang seiner gesamten Länge in dem unteren Teil davon einen ausladenden Wulst (12) angeordnet hat, welcher rechtwinklig aus dem Basisprofil (1) hervortritt und geeignet ist zum Unterstützen eines Streifenprofils (59).

7. Kanal für elektrische Installationen nach Anspruch 6, **dadurch gekennzeichnet, dass** der hervorstehende Wulst (12) aus der unteren Kante des Basisprofils (1) hervortritt und eine Unterstützung bildet, auf welcher ein Streifenprofil (59) eingefügt ist, wobei das Streifenprofil (59) ein C-Profil ist, welches eine klemmende Kante (60) und eine Klappe (61) zum Aufsitzen auf dem Boden hat.

8. Kanal für elektrische Installationen nach irgendeinem der Ansprüche 1 bis 7, **dadurch gekennzeichnet, dass** es umfasst eine Verzweigungseinrichtung, die zwischen zwei Teile eines Basisprofils (1) einzusetzen ist und welche durch ein Führungsbauteil (17) für verzweigte Kabel gebildet ist, welches mit Öffnungen (22) zum Sichern an einer Wand ausgestattet ist, und ein Abdeckungsbauteil (18) für das Führungsbauteil (17), mit welchem es mittels einer Schraube (24) verbunden ist, wobei das Führungsbauteil (17) aus einer Basisplatte (19) gebildet ist, aus welchem von einem seiner Seiten eine Vielzahl trennbarer Platten (20) hervortritt, welche auf Kante und ohne Beziehung zueinander angeordnet sind, ein Raster bildend, welches längsgerichtete und/oder querlaufende Pfade konfiguriert, wenn die Platten (20) in einer Art getrennt sind, welches derartiges erlaubt, während von den längsgerichteten Kanten der Basisplatte (19) sich Klappen (21) erstrecken zum Einfügen in die Träger (7) jedes zu verbindenden Teils eines Basisprofils (1).

9. Kanal für elektrische Installationen nach Anspruch 8, **dadurch gekennzeichnet, dass** das abdeckende Bauteil (18) das Führungsbauteil (17) frontal abdeckt und mittels zweier Klappen (27, 30) das Führungsbauteil (17) sowohl in dem oberen Teil und dem unteren Teil davon abdeckt, wobei das Führungsbauteil (17) einen quergerichteten Abschnitt (25) hat, welcher koplanar mit dem unteren der Träger (7) liegt und normal ist zu der Basisplatte (19) des Führungsbauteils (17), wobei die untere (30) der Klappen den quergerichteten Abschnitt (25) überlappt, während die obere (27) der Klappen die Kante der oberen vertikal trennbaren Platten (20) abdeckt und Schwächungslinien (28) hat, um durch Trennung entlang gewisser der Schwächungslinien (28) den Zugang von Formkanälen zu erlauben für die Leiter, welche von den Trägern (7) des Kanalbasisprofils (1) abzweigen.

10. Kanal für elektrische Installationen nach irgendeinem der Ansprüche 1 bis 9, **dadurch gekennzeichnet, dass** er umfasst eine Verbindungsabdeckungsvorrichtung, die zwischen zwei Kanalteilen zu installieren ist, welche durch ein Verbindungsbauteil (31) gebildet ist, welches konstruiert ist, um die Basisprofile (1A, 1B) der zwei Kanalteile zu verbinden, und ein Deckbauteil (32), welches konstruiert ist, um über das Verbindungsbauteil (31) platziert zu sein, um derartiges zu bedecken, wobei das Verbindungsbauteil (31) gestreckt ist und umfasst ein Netz (38), aus welchem lateral Verbindungspaaranhänge (37) hervortreten, welche in die Träger (7) passen von einem und dem anderen der Basisprofile (1A, 1B) der Kanalteile.

11. Kanal für elektrische Vorrichtungen nach Anspruch 10, **dadurch gekennzeichnet, dass** zumindest eines der Verbindungspaaranhänge (37) mit einer hakenförmigen Lippe (36) ausgestattet ist und einer unteren Lippe (35) in den entsprechenden Trägern (7) der Kanalbasisprofile (1A, 1B) ausgestattet ist, demnach eingreifende Mittel bildend durch das Passen der hakenförmigen Lippe (36) auf die untere Lippe (35).

12. Kanal für elektrische Installationen nach den Ansprüchen 5 und 10, **dadurch gekennzeichnet, dass** das Verbindungsbauteil (31) umfasst eine obere Klappe, ausgestattet mit Fingern (33), und eine untere Klappe (39), die demnach Mittel zum Eingreifen bilden durch Klemmen der Finger (33) auf die Haube (8) der Kanalbasisprofile (1A, 1B) und durch Kuppeln der unteren Klappe (3) auf die Kante der dihedralen Wand (11) der Basisprofile (1A,1B).

13. Kanal für elektrische Installationen nach den Ansprüchen 5 und 10, **dadurch gekennzeichnet, dass** das Deckbauteil (32) gebildet ist aus einer rechteckigen Platte (41), welche senkrecht gebogen ist an dem oberen Ende davon, um eine obere Klappe (42) zu bilden zum Bedecken des entsprechenden Teils der Haube (8) der Kanalbasisprofile (1A, 1 B), wobei die rechtwinklige Platte (41) gleichfalls ausgestattet ist, an dem unteren Ende davon, mit einer unteren Klappe (44), welche zu der konkaven Seite der dihedralen Wand (11) der Basisprofile (1A, 1B) passt.

14. Kanal für elektrische Installationen nach den Ansprüchen 12 und 13, **dadurch gekennzeichnet, dass** die Finger (33) des Verbindungsbauteils (31) durch einen Einschnitt (34) getrennt sind, und die obere Klappe (42) der rechtwinkligen Platte (41) des Deckbauteils (32) einen Zahn (43) hervorstehen lässt, welcher in den Einschnitt (34) passt.

15. Kanal für elektrische Installationen nach irgendeinem der Ansprüche 10 bis 14, **dadurch gekennzeichnet, dass** das Netz (38) des Verbindungsbauteils (31) ausgestattet ist mit einem längsgerichteten Durchgangsspalt (40) und die innere Seite des Deckbauteils (32) mit einer Rippe (45) ausgestattet ist zum Einpassen in den längsgerichteten Durchgangsspalt (40) des Verbindungsbauteils (31).

16. Kanal für elektrische Installationen nach irgendeinem der Ansprüche 1 bis 15, **dadurch gekennzeichnet, dass** er umfasst eine Endabdeckungsvorrichtung (46), welche geeignet ist, um auf einem Ende eines Kanalteils angeordnet zu sein, wobei die Abdeckvorrichtung (46) besteht aus einem offenen prismatischen Körper, welcher eine Stirnwand (47) und eine Rückwand (48) hat, welche enger ist als die Stirnwand (47), wobei die Wände (47, 48) durch jeweilige Basen (49) und durch eine laterale Wand (50) verbunden sind, welche zu all dem Vorhergehenden senkrecht ist und einer offenen Seite zugewandt, wobei die innere Seite der lateralen Wand (50) Klappen (51) zum Positionieren in Bezug zu den Trägern (7) des Basisprofils (1) hat.

17. Kanal für elektrische Installationen nach Anspruch 16, **dadurch gekennzeichnet, dass** der zentrale Träger (7) des Basisprofils (1) ausgestattet ist mit einem Kanal (53) und die innere Seite der lateralen Wand (50) der Endabdeckvorrichtung (46) ausgestattet ist mit kranzförmigen Vorsprüngen (52), welche eins zu eins übereinstimmen mit dem Kanal (53), wobei es möglich ist, eines oder das andere der kranzförmigen Vorsprünge (52) zu perforieren für das Einführen einer Befestigungsschraube entsprechend, ob sie das rechte oder linke Ende des Kanals sind.

## Revendications

1. Gainage pour des installations électriques, ledit gainage adoptant une configuration de plinthe ouvrante comprenant un profil de base (1) associé à un profil de couvercle (2), ledit profil de base (1) comprenant un élément de base plat (3) conçu pour être appliqué par une face à une paroi pour montage et une série de séparations en console (4) faisant saillie perpendiculairement depuis l'autre face dudit profil de base (1), lesdites séparations en console (4) formant à leur extrémité libre une garde (5) qui est espacée de la séparation en console immédiatement au-dessus, les ensembles desdites séparations en console (4) et desdites gardes (5) constituant un nombre correspondant de supports (7) pour maintenir des conducteurs électriques, **caractérisé en ce que** le bord libre de ladite garde (5) est amené vers l'intérieur par rapport au plan externe de ladite garde (5) et est complété avec une baguette (55), ladite baguette (55) constituant des moyens de support dans lesquels un carreau de retenue de câble (54) est fixé par fixation, ledit carreau de retenue (54) fermant, à un intervalle, l'accès avant audit support (7) constitué par ladite garde (5).

2. Gainage pour installations électriques selon la revendication 1, **caractérisé en ce que** ledit carreau de retenue (54) a, dans son bord appliqué sur ladite garde (5), des agencements de fixation qui se fixent sur ladite baguette (55) de ladite garde (5), permettant la rotation dudit carreau de retenue (54) vers l'intérieur dudit support (7), lesdits agencements de fixation comprenant un rabat (57) qui empêche la rotation dudit carreau de retenue (54) vers l'extérieur desdits supports (7).

3. Gainage pour installations électriques selon la revendication 2, **caractérisé en ce que** ledit carreau de retenue (54) étend la face externe de ladite garde (5) et s'ajuste sur un gradin (58) formé par la position amenée vers l'intérieur dudit bord libre de ladite garde (5), de sorte que les faces externes dudit carreau de retenue (54) et de ladite garde (5) soient coplanaires.

4. Gainage pour installations électriques selon la revendication 3, **caractérisé en ce que** lesdits agencements de fixation comprennent un nez central (56) disposé entre deux desdits rabats (57), ledit nez central (56) et lesdits rabats (57) fixant ladite baguette (55) par des côtés opposés.

5. Gainage pour installations électriques selon l'une quelconque des revendications 1 à 4, **caractérisé en ce que** le support supérieur desdits supports (7) fait face à une couverture (8) qui limite ledit élément de base plat (3) au sommet de celui-ci et a un renfoncement (9) où il s'assemble avec le bord dudit élément de base plat (3), le support inférieur desdits supports (7) faisant face, au moyen de sa face arrière, à la face convexe d'une paroi diédrique (11) qui fait saillie depuis ledit élément de base plat (3), et ledit profil de couvercle (2) est constitué d'un élément de couvercle plat (13) qui, au bord supérieur de celui-ci, a un rabat (14) qui, étant dimensionné de manière à recouvrir ladite couverture (8) de l'élément de base plat (3), a une dent d'extrémité (15) pour engagement dans ledit renfoncement (9) de ladite couverture (8) et, au bord inférieur de celui-ci, ledit élément de couvercle plat (13) a un rabat oblique (16) qui s'accouple avec une partie de la face concave de la paroi diédrique (11), de sorte que lorsque ledit profil de couvercle (2) est assemblé audit profil de base (1), ladite dent d'extrémité (15) étant engagée dans ledit renfoncement (9) de la couverture (8) et ledit rabat oblique (16) étant appliqué contre ladite face concave de la paroi diédrique (11), la face interne dudit élément de couvercle plat (13) soit appliquée contre le plan externe desdites gardes (5).

6. Gainage pour installations électriques selon l'une quelconque des revendications 1 à 5, **caractérisé en ce que** ledit profil de base (1) comporte, agencé le long de sa longueur entière, dans la partie inférieure de celui-ci, une baguette en console (12) qui fait saillie perpendiculairement depuis ledit profil de base (1) et est adaptée pour soutenir ledit profil de bande (59).

7. Gainage pour installations électriques selon la revendication 6, **caractérisé en ce que** ladite baguette en console (12) fait saillie depuis le bord inférieur du profil de base (1) et constitue un support sur lequel un profil de bande (59) est inséré, ledit profil de bande (59) étant un profil en C qui a un bord de fixation (60) et un rabat (61) pour reposer sur le sol.

8. Gainage pour installations électriques selon l'une quelconque des revendications 1 à 7, **caractérisé en ce qu'**il comprend un dispositif de branchement, destiné à être interposé entre deux parties du profil de base (1) et qui est constitué d'un élément de guidage (17) pour des câbles branchés qui est pourvu d'ouvertures (22) pour fixation à une paroi, et un élément de couvercle (18) pour ledit élément de guidage (17), auquel il est assemblé au moyen d'une vis (24), ledit élément de guidage (17) étant constitué d'une plaque de base (19) depuis laquelle font saillie, depuis une de ses faces, une pluralité de carreaux ségrégeables (20) qui, agencés verticalement et sans relation mutuelle, forment une grille qui configure des trajets longitudinaux et/ou transversaux lorsque lesdits carreaux (20) sont séparées dans un ordre qui permet celui-ci, tandis que depuis les bords longitudinaux de ladite plaque de base (19) s'étendent des rabats (21) pour insertion dans les supports (7) de chaque partie de profil de base (1) à assembler.

9. Gainage pour installations électriques selon la revendication 8, **caractérisé en ce que** ledit élément de couvercle (18) recouvre frontalement ledit élément de guidage (17) et, au moyen de deux rabats (27, 30) recouvre ledit élément de guidage (17) à la fois dans la partie supérieure et la partie inférieure de celui-ci, ledit élément de guidage (17) ayant une séparation transversale (25) qui est en position coplanaire avec l'extrémité inférieure desdits supports (7) et est normale par rapport à la plaque de base (19) dudit élément de guidage (17), le rabat inférieur (30) desdits rabats chevauchant ladite séparation transversale (25), tandis que le rabat supérieur (27) desdits rabats recouvre les bords des carreaux ségrégeables verticaux supérieurs (20) et a des lignes de faiblesse (28) pour, par séparation le long de certaines desdites lignes de faiblesse (28), permettre l'accès de gainages de moulure pour les conducteurs branchés depuis les supports (7) du profil de base de gainage (1).

10. Gainage pour installations électriques selon l'une quelconque des revendications 1 à 9, **caractérisé en ce qu'**il comprend un dispositif de couvercle de jonction, destiné à être installé entre deux parties de gainage, qui est formé d'un élément de jonction (31) conçu pour assembler les profils de base (1A, 1B) desdites deux parties de gainage, et un élément de couvercle (32) conçu pour être placé au-dessus dudit élément de jonction (31) de manière à recouvrir celui-ci, ledit élément de jonction (31) étant allongé et comprenant une bande (38) depuis laquelle font saillie latéralement des paires d'appendices assemblés (37) qui s'ajustent dans les supports (7) de l'un et l'autre des profils de base (1 A, 1B) desdites parties de gainage.

11. Gainage pour installations électriques selon la revendication 10, **caractérisé en ce qu'**au moins une desdites paires d'appendices assemblés (37) est pourvue d'une lèvre à crochet (36), et une lèvre inférieure (35) est disposée dans les supports (7) correspondants des profils de base de gainage (1A, 1B), de manière à constituer des moyens d'engagement par l'ajustement de ladite lèvre à crochet (36) sur ladite lèvre inférieure (35).

12. Gainage pour installations électriques selon les revendications 5 et 10, **caractérisé en ce que** ledit élément de jonction (31) comprend un rabat supérieur pourvu de griffes (33) et un rabat inférieur (39), de manière à constituer des moyens d'engagement par fixation des griffes (33) sur la couverture (8) des profils de base de gainage (1A, 1B) et par couplage du rabat inférieur (39) sur le bord de la paroi diédrique (11) desdits profils de base (1A, 1B).

13. Gainage pour installations électriques selon les revendications 5 et 10, **caractérisé en ce que** ledit élément de couvercle (32) est constitué d'une plaque rectangulaire (41) qui est pliée perpendiculairement à l'extrémité supérieure de celle-ci pour former un rabat supérieur (42) pour recouvrir la partie correspondante de la couverture (8) des profils de base de gainage (1A, 1B), ladite plaque rectangulaire (41) étant pourvue, de manière similaire, à l'extrémité inférieure de celle-ci, d'un rabat inférieur (44) qui s'accouple avec la face concave de la paroi diédrique (11) desdits profils de base (1 A, 1B).

14. Gainage pour installations électriques selon les revendications 12 et 13, **caractérisé en ce que** lesdites griffes (33) de l'élément de jonction (31) sont séparées par une encoche (34) et ledit rabat supérieur (42) de la plaque rectangulaire (41) de l'élément de couvercle (32) fait saillir une dent (43) qui s'ajuste dans ladite encoche (34).

15. Gainage pour installations électriques selon l'une quelconque des revendications 10 à 14, **caractérisé en ce que** la bande (38) dudit élément de jonction (31) est pourvu d'une fente de passage longitudinale (40), et la face interne dudit élément de couvercle (32) est pourvue d'une nervure (45) pour ajustement dans ladite fente de passage longitudinale (40) de l'élément de jonction (31).

16. Gainage pour installations électriques selon l'une quelconque des revendications 1 à 15, **caractérisé en ce qu'**il comprend un dispositif de couvercle d'extrémité (46) adapté pour être agencé à une extrémité d'une partie dudit gainage, ledit dispositif de couvercle (46) étant constitué d'un corps prismatique ouvert qui a une paroi avant (47) et une paroi arrière (48) qui est plus étroite que ladite paroi avant (47), lesdites deux parois (47, 48) étant assemblées par des bases respectives (49) et par une paroi latérale (50) qui est perpendiculaire à toutes celles-ci et fait face à une face ouverte, la face interne de ladite paroi latérale (50) ayant des rabats (51) pour positionnement par rapport aux supports (7) du profil de base (1).

17. Gainage pour installations électriques selon la revendication 16, **caractérisé en ce que** 1e support central (7) du profil de base (1) est pourvu d'un canal (53), et la face interne de ladite paroi latérale (50) du dispositif de couvercle d'extrémité (46) est pourvue de saillies annulaires (52) qui coïncident un à un avec ledit canal (53), l'une ou l'autre desdites saillies annulaires (52) pouvant être individuellement perforée pour l'introduction d'une vis de fixation suivant qu'elles sont à l'extrémité droite ou gauche du gainage.
